(19) Europäisches Patentamt
European Patent Office
Office européen des brevets

(11) **EP 2 458 340 B1**

(12) **FASCICULE DE BREVET EUROPEEN**

(45) Date de publication et mention de la délivrance du brevet:
**20.12.2017 Bulletin 2017/51**

(51) Int Cl.:
***G01D 4/00*** *(2006.01)*

(21) Numéro de dépôt: **11354060.3**

(22) Date de dépôt: **04.11.2011**

(54) **Procédé et dispositif de détermination de la structure d'un réseau de distribution d'électricité**

Verfahren und Vorrichtung zur Bestimmung der Struktur eines Stromverteilungsnetzes

Method and device for determining the structure of a power grid

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.11.2010 FR 1004580**

(43) Date de publication de la demande:
**30.05.2012 Bulletin 2012/22**

(73) Titulaire: **Schneider Electric Industries SAS**
**92500 Rueil-Malmaison (FR)**

(72) Inventeurs:
• **Deschamps, Philippe**
**38050 Grenoble Cedex 09 (FR)**
• **Alvarez-Herault, Marie-Cécile**
**38050 Grenoble Cedex 09 (FR)**

(74) Mandataire: **Tripodi, Paul et al**
**Schneider Electric Industries SAS**
**Service Propriété Industrielle**
**World Trade Center - E1**
**5 Place Robert Schuman**
**38050 Grenoble Cedex 9 (FR)**

(56) Documents cités:
WO-A1-2009/061291     DE-A1-102008 044 915
US-A1- 2004 263 147     US-A1- 2007 005 277
US-A1- 2009 066 528

**Description**

DOMAINE TECHNIQUE

La présente invention concerne le domaine de la distribution électrique sur un réseau, notamment un réseau public. L'invention concerne un procédé de détermination de la structure d'un réseau de distribution d'électricité. L'invention concerne également un dispositif de détermination mettant en oeuvre un tel procédé. L'invention concerne aussi un support de données et un programme d'ordinateur adapté à la mise en oeuvre d'un tel procédé.

ETAT DE LA TECHNIQUE

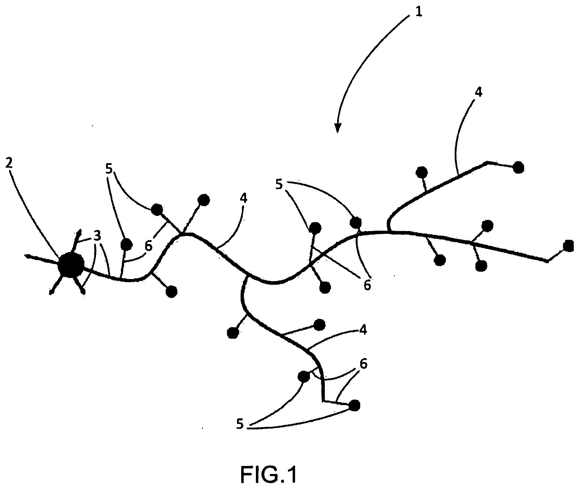

Comme représenté à la figure 1, sur un réseau électrique 1, la distribution terminale d'électricité est réalisée en basse tension (BT) depuis des postes 2 de distribution MT/BT (Moyenne Tension / Basse Tension) vers des consommateurs basse tension 5, notamment des foyers d'habitation. Un poste MT/BT 2 présente plusieurs départs 3. Chaque départ se déploie en une structure radiale 4 présentant plusieurs branchements monophasés ou triphasés 6. Cette structure de réseau dessert un certain nombre de consommateurs 5, en monophasé ou en triphasé. Dans le poste MT/BT 2, se situe un tableau BT répartissant la puissance sur les différents départs 3 précédemment mentionnées. Il y a typiquement entre 1 et 8 départs, éventuellement protégés par des fusibles ou des disjoncteurs.

Les réseaux basse tension sont denses, parfois aériens, parfois souterrains, mélangeant des matériels variables et des câbles d'âges variables. Ils sont exploités par des sociétés d'électricité qui ont pour certaines un historique de l'ordre du siècle durant lequel ce réseau a fait l'objet de modifications, d'extensions, de réparations. Ces réseaux sont techniquement simples, peu sujets à panne et par le fait bien souvent pas, peu, ou mal documentés.

Deux facteurs viennent se greffer sur ce paysage. D'une part, la dérégulation du secteur de l'électricité impose la séparation des acteurs. Par ailleurs, les réseaux de distribution reviennent aux distributeurs d'électricité qui conservent un statut monopolistique, mais se trouvent sous contraintes des régulateurs nationaux. Ceux-ci imposent à leurs distributeurs des objectifs de qualité de service qui doivent être mesurés, entre autre, en temps et nombre de coupures vues par chacun des consommateurs raccordés. Ces objectifs sont contraignants et peuvent donner lieu à des pénalités s'ils ne sont pas respectés. Les distributeurs ont par conséquent besoin dorénavant d'une très grande précision sur les données de coupures et d'informations précises pour mieux localiser les éventuels défauts ou défaillances.

D'autre part, toujours dans le cadre de la dérégulation, un certain nombre de pays a décidé de déployer des compteurs communicants qui évitent le déplacement de personnels pour assurer les relevés. Selon les contextes réglementaires et selon les distributeurs, différentes architectures ont été retenues pour assurer les opérations de relevés des compteurs à distance. Dans certaines de ces architectures, certains distributeurs ont décidé de mettre en place un concentrateur de données dans chaque poste de distribution MT/BT. Celui-ci assure la collecte des données de chacun des compteurs qui lui sont raccordés. Les données de comptage sont reçues par le biais de courants porteurs en ligne ou par des moyens radioélectriques à fréquence régulière (de l'ordre de la demi-heure à la journée). Le concentrateur renvoie ensuite l'ensemble de ces mesures à un niveau supérieur par un autre moyen de communication. Des données de comptage en quasi temps réel de chacun des compteurs sont donc disponibles dans chaque poste MT/BT.

Avant le déploiement des compteurs communicants, il était économiquement impossible d'avoir accès en quasi temps réel aux valeurs de comptage de chacun des compteurs. Par ailleurs, les technologies courantes de capteurs ne permettent pas de mesurer économiquement le courant sur chacune des phases de chacun des départs BT d'un poste MT/BT.

Comme vu précédemment, la structure des réseaux est parfois mal documentée. Néanmoins, la connaissance de ces structures est importante. Il apparaît donc très intéressant de pouvoir déterminer ces structures de manière simple, économique et efficace. Une telle connaissance du réseau permet notamment de déterminer et de localiser finement et de manière simple et économique des pertes non techniques ou des dysfonctionnements sur le réseau. Par ailleurs, elle permet également de diagnostiquer des déséquilibres du réseau au niveau de chaque départ.

On connaît du document US 2010/0007219 un procédé utilisant de nombreux appareils de mesure en différents endroits d'un réseau afin de déterminer l'architecture de ce réseau. Un tel procédé est très coûteux car il nécessite de nombreux dispositifs de mesure à différents niveaux dans le réseau. Il permet également de déterminer si de l'énergie est volée sur le réseau. Dautres procédés sont connus des documents DE 102008044915 et US 2007/005277.

On connaît du document US 2007/14313 un procédé d'optimisation de l'interprétation de données issues d'un système de mesure ou de surveillance d'un réseau électrique.

EXPOSE DE L'INVENTION

Le but de l'invention est de fournir un procédé de détermination de la structure d'un réseau électrique permettant de remédier aux problèmes évoqués précédemment et améliorant les procédés connus de l'art antérieur. En particulier, l'invention propose un procédé de détermination de structure simple, économique et efficace. L'invention est défini dans les revendications indépendantes. Le procédé de détermination de la structure d'un réseau de distribution d'électricité comprenant un poste alimentant un ensemble de consommateurs via un ou plusieurs départs présentant une ou plusieurs phases comprend les étapes suivantes :

réception de premières informations de consommation électrique relatives à chaque consommateur de l'ensemble,

réception de deuxièmes informations de consommation électrique relatives aux départs ou aux phases de chaque départ du poste,

utilisation des premières et deuxièmes informations comprenant une phase de calcul, pour déterminer à l'intérieur de l'ensemble, des sous-ensembles de consommateurs, les consommateurs d'un même sous-ensemble étant alimentés par un même départ donné et/ou par une même phase donnée d'un départ donné.

Avantageusement, la phase de calcul est basée sur une hypothèse de conservation de l'énergie appliquée aux premières et deuxièmes informations.

De préférence, la phase de calcul comprend le calcul de coefficients traduisant qu'un consommateur est raccordé ou non à un départ ou à une phase.

Avantageusement, un coefficient égal ou sensiblement égal à 1 traduit que le consommateur est raccordé au départ ou à la phase et/ou qu'un coefficient égal ou sensiblement égal à 0 traduit que le consommateur n'est pas raccordé au départ ou à la phase.

Avantageusement, la phase de calcul, notamment une phase de calcul de coefficients, utilise une méthode d'optimisation du type des moindres carrés. La phase de calcul comprend le calcul d'un coefficient de confiance. L'étape d'utilisation comprend une phase de comparaison des résultats de différentes itérations de la phase de calcul. On conclut à l'existence de pertes non techniques sur le réseau si les différents résultats des itérations de la phase de calcul sont sensiblement différents.

Selon l'invention, un support d'enregistrement de données lisible par un calculateur sur lequel est enregistré un programme d'ordinateur comprend des moyens logiciels de mise en oeuvre des étapes du procédé tel que défini ci-dessus.

Selon l'invention, un dispositif de détermination de la structure d'un réseau de distribution d'électricité comprenant un poste alimentant un ensemble de consommateurs via un ou plusieurs départs présentant une ou plusieurs phases, comprend des moyens matériels et/ou logiciels de mise en oeuvre des étapes du procédé tel que défini ci-dessus. Les moyens matériels comprennent un moyen de réception d'informations de consommation d'énergie, notamment de réception de premières informations de consommation électrique relative à chaque consommateur de l'ensemble et de réception de deuxièmes informations de consommation électrique relatives aux des départs ou aux phases de chaque départ du poste, un moyen d'analyse ou de traitement comprenant un moyen de calcul et un moyen de restitution d'informations, notamment d'informations concernant des sous-ensembles de consommateurs alimentés par un même départ donné et/ou par une même phase donnée d'un départ donné.

Selon l'invention, un programme informatique comprend un moyen de code de programme informatique adapté à l'exécution des étapes du procédé tel que défini ci-dessus, lorsque le programme est exécuté sur un ordinateur.

BREVE DESCRIPTION DES DESSINS

Les dessins annexés représentent, à titre d'exemple, un mode de réalisation d'un réseau électrique comprenant un dispositif de mise en oeuvre d'un procédé de détermination selon l'invention et un mode d'exécution d'un procédé de détermination selon l'invention.

La figure 1 montre un schéma d'architecture générale d'un réseau de distribution d'électricité BT.

La figure 2 montre un schéma détaillé d'un exemple de réseau de distribution d'électricité BT.

La figure 3 montre un schéma d'un exemple de réseau de distribution d'électricité simplifié.

La figure 4 est un ordinogramme d'un mode d'exécution d'un procédé de détermination selon l'invention.

DESCRIPTION DETAILLEE DE MODES DE REALISATION PREFERES

Le récent déploiement de compteurs de consommation électrique communicants au niveau des consommateurs finaux implique l'implémentation de moyens de traitement et de communications dans les postes 1 de distribution MT/BT. Ceci donne l'opportunité d'implanter dans les postes 1 de distribution MT/BT des fonctions de traitement avancées, ce qui n'était pas possible auparavant. Le procédé selon l'invention permet, de manière économique et automatique, de déterminer ou de reconstituer la structure ou le schéma d'un réseau de distribution BT (c'est-à-dire de déterminer quel consommateur 5 est relié à quel départ ou liaison 3, voire à quelle phase), notamment à partir de données et de mesures disponibles dans le poste de distribution MT/BT. Ceci permet entre autre de :

- quantifier et localiser les pertes non techniques (notamment le vol d'énergie, et les erreurs de base de données commerciales).
- connaître précisément l'état des pertes sur le réseau BT et localiser les départs qui y contribuent le plus,
- identifier les déséquilibres de consommation par phase à l'échelle de chaque départ, et/ou
- connaître exactement le nombre de clients impactés par un défaut sur un départ BT 3 donné de manière à calculer des indices de performance SAIDI (temps moyen de coupure par an et par client) et SAIFI (fréquence moyenne de coupure par an et par client) précis.

Chaque consommateur ou utilisateur final 5 est équipé d'un compteur communicant qui permet de transmettre régulièrement une information de consommation au poste 2 sur lequel il est raccordé. Une base de données située dans le poste contient les relevés de consommation successifs de chacun des compteurs raccordés.

Ainsi, il est possible de définir des indices représentatifs des consommations de chacun des consommateurs (énergie active et/ou réactive et/ou apparente, puissance instantanée active et/ou réactive et/ou apparente, courant instantané actif et/ou réactif et/ou apparent...).

Un système de mesure ou de comptage de consommation est mis en place dans le poste 2 au niveau de chaque départ 3 ou au niveau de chaque phase de chaque départ 3 permettant de mesurer des informations homogènes aux informations mesurées par chacun des compteurs, c'est-à-dire des indices représentatifs des consommations (énergie active et/ou réactive et/ou apparente, puissance instantanée active et/ou réactive et/ou apparente, courant instantané actif et/ou réactif et/ou apparent...).

Dans un mode de réalisation préféré, les données de consommations recueillies au niveau de chaque consommateur et dans le poste 2 au niveau des départs ou des phases sont synchronisées, c'est-à- dire qu'elles sont relatives à une même période dans le cas d'une énergie ou à un même instant s'il s'agit d'une puissance ou d'une intensité de courant.

Quel que soit le type de consommateur (triphasé ou monophasé), celui-ci est affecté au départ auquel il est raccordé grâce au procédé selon l'invention.

L'affectation à la phase correspondante est possible en fonction du type d'information disponible.

Si les compteurs des consommateurs triphasés donnent trois indices représentatifs des consommations correspondant à chaque phase, alors l'affectation de chaque consommateur à la phase ou aux phases auxquelles il est raccordé est possible.

Si les compteurs des consommateurs triphasés ne donnent qu'un indice global représentatif de la consommation globale du consommateur, alors l'affectation de chaque consommateur à la phase ou aux phases auxquelles il est raccordé peut ne pas être possible. Néanmoins, cette affectation peut être rendue possible grâce à un autre dispositif permettant d'identifier les phases raccordées aux compteurs présents au niveau des consommateurs.

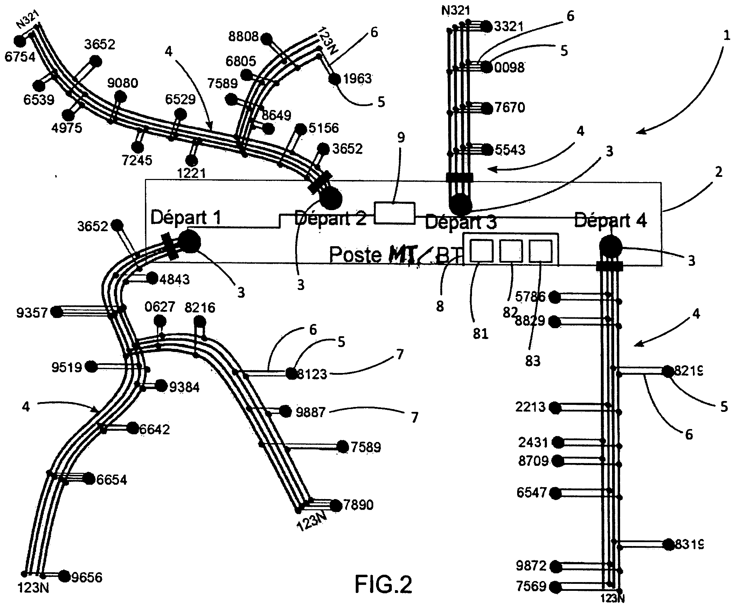

Comme représenté à la figure 2, sur un réseau électrique 1, la distribution terminale d'électricité est réalisée en basse tension (BT) depuis des postes 2 de distribution MT/BT 2 vers des consommateurs 5 basse tension, notamment des foyers d'habitation. Un poste de distribution MT/BT 2 est le départ d'une structure de réseau présentant plusieurs lignes triphasées 4, chacune reliée par une liaison ou départ 3 au poste. Cette structure de réseau dessert un certain nombre de consommateurs, en monophasé ou en triphasé (de l'ordre de la centaine). Dans le poste MT/BT, se situe un tableau BT répartissant la puissance sur les différents départs 3. Il y a typiquement entre 1 et 8 départs éventuellement protégés par des fusibles ou des disjoncteurs. Sur la figure 2, chaque départ comprend quatre conducteurs électriques : les trois phases identifiées chacune par les chiffres 1, 2, 3 et le neutre identifié par la lettre N. Les consommateurs triphasés sont reliés à chacun des conducteurs électriques et les consommateurs monophasés sont reliés à l'une des phases et au neutre. Sur l'exemple de la figure 2, le poste 2 comprend 4 départs basse tension 3. Chaque départ alimente un certain nombre de consommateurs monophasés et/ou triphasés. A chaque consommateur est affecté un compteur communicant 7 identifié par un repérage propre au distributeur (numéro à quatre chiffres donné en exemple sur la figure 2). Chaque compteur transmet une information de consommation (par exemple d'énergie active) s'il est monophasé et trois informations de consommation (par exemple d'énergie active) relatives à chacune des phases s'il est triphasé. Ces informations sont transmises à un dispositif 8 de détermination d'une structure de réseau, par exemple situé dans le poste 2, par un moyen de communication approprié (par ondes radioélectriques ou par courants porteurs en ligne par exemple). Par ailleurs, un système de mesure 9 mesure sur chaque départ ou sur chaque phase de chaque départ une information de consommation (par exemple énergie active) et transmet également ces informations au dispositif 8. Ce système de mesure peut éventuellement utiliser une technologie sans fil de manière à simplifier sa mise en oeuvre sur les postes existants.

Le dispositif de détermination 8 comprend un moyen 81 de réception des informations de consommation transmises par les compteurs communicants 7 et par le système de mesure 9, un moyen 82 d'analyse ou de traitement de ces informations et, éventuellement, un moyen 83 pour délivrer un rapport d'analyse, comme un moyen d'émissions d'information ou une interface de communication, notamment visuelle et/ou sonore. Ce moyen 83 permet notamment à une personne en charge de la gestion du réseau de recevoir une information de structure supposée du réseau par la mise en oeuvre du procédé de détermination selon l'invention.

Le dispositif de détermination 8 comprend des moyens matériels et/ou logiciels permettant de régir son fonctionnement conformément au procédé objet de l'invention. Les moyens logiciels peuvent notamment comprendre un moyen de code de programme informatique adapté à la réalisation des étapes du procédé selon l'invention, lorsque le programme tourne sur un ordinateur. Les logiciels peuvent être compris dans le moyen 82 d'analyse ou de traitement.

En partant des données décrites auparavant, le procédé de détermination selon l'invention affecte chacun des compteurs à l'un des départs ou à l'une des phases de l'un des départs en trouvant la bonne combinaison d'affectation. En d'autres termes, le procédé de détermination détermine, parmi l'ensemble des consommateurs, des sous-ensembles, chaque sous-ensemble correspondant à l'ensemble des consommateurs raccordés à un même départ ou à l'ensemble des consommateurs raccordés à une même phase d'un même départ. Le résultat peut être présenté sous la forme d'une table de données, comme représenté ci-dessous pour l'exemple du réseau de la figure 2, listant les départs, les phases et les compteurs raccordés.

| Départ 1 | | | Départ 2 | | | Départ 3 | | | Départ 4 | | |
|---|---|---|---|---|---|---|---|---|---|---|---|
| Phase 1 | Phase 2 | Phase 3 | Phase 1 | Phase 2 | Phase 3 | Phase 1 | Phase 2 | Phase 3 | Phase 1 | Phase 2 | Phase 3 |
| Cpt 3652 | | | Cpt 3652 | | | | Cpt 5543 | | | Cpt 5786 | |
| | | Cpt 4843 | Cpt 5156 | | | | Cpt 7670 | | | Cpt 8829 | |
| | Cpt 9357 | | | | | Cpt 8649 | Cpt 0098 | | | | Cpt 8219 |
| Cpt 8216 | Cpt 0627 | | | Cpt 7589 | | | Cpt 3321 | | | Cpt 2213 | |
| | | | | | | Cpt 6805 | | | Cpt 2431 | | |
| | | Cpt 9519 | | | | Cpt 8808 | | | Cpt 8709 | | |
| | | Cpt 8123 | | | Cpt 1963 | | | | | Cpt 6547 | |
| | | Cpt 9384 | | | Cpt 1221 | | | | | | Cpt 8319 |
| | Cpt 9887 | | | | Cpt 6529 | | | | | Cpt 9872 | |
| | | Cpt 6642 | | | Cpt 7245 | | | | | Cpt 7569 | |
| | | | | | Cpt 9080 | | | | | | |
| Cpt 7589 | | | | | | | | | | | |
| | | Cpt 6654 | | Cpt 4975 | | | | | | | |
| | | Cpt 7890 | Cpt 3652 | | | | | | | | |
| Cpt 9656 | | | | | Cpt 6539 | | | | | | |
| | | | | Cpt 6754 | | | | | | | |

6

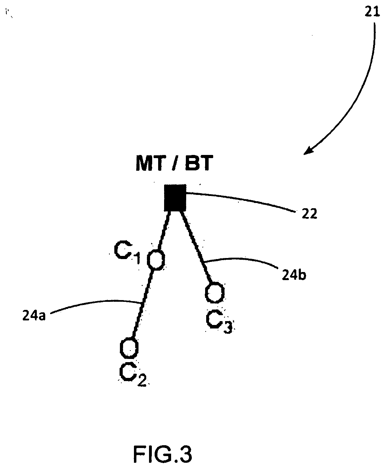

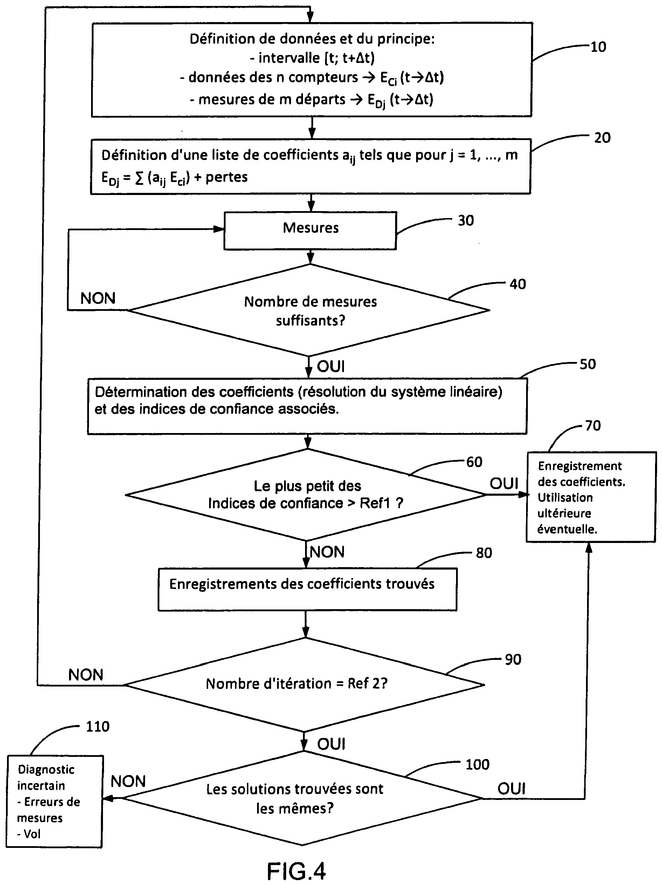

Un mode d'exécution du procédé de détermination selon l'invention est décrit ci-après en référence à la figure 4, le procédé de détermination étant appliqué à un exemple de réseau 21 représenté à la figure 3. Ce réseau 21 comprend un poste 22 ayant deux départs avec des lignes 24a et 24b. Le premier départ 24a comprend deux consommateurs $C_1$ et $C_2$ sur sa ligne 24a et le second départ comprend un consommateur $C_3$ sur sa ligne 24b.

Par la suite, dans la description du mode d'exécution, nous raisonnons avec des énergies actives. Un raisonnement similaire avec d'autres mesures homogènes est également possible et suit la même démarche (énergie réactive, énergie apparente, puissance active, puissance réactive, puissance apparente, courants, notamment).

Pour simplifier la description, on suppose que tous les consommateurs sont triphasés. Ainsi, on raisonne par départ en regardant l'énergie totale active (sur les 3 phases) consommée mesurée sur le départ d'une part et l'énergie active mesurée par les compteurs installés au niveau des consommateurs d'autre part. Le raisonnement est similaire avec des consommateurs monophasés sauf qu'au lieu de raisonner par départ, on doit raisonner par phase.

Dans une première étape 10, on définit les données principales du réseau et les données et le principe du procédé de détermination. Notamment, on détermine les données du tableau suivant :

| Nombre total de consommateurs | n (3 dans l'exemple de la figure 3) |
|---|---|
| Nombre total de départs ou de phases | m (2 dans l'exemple de la figure 3) |
| Données recueillies au niveau de chaque consommateur | index d'énergie E(t) : il s'agit du cumul d'énergie consommée par chaque consommateur à un instant t. |
| Données recueillies au niveau de chaque départ ou phase | mesures d'énergie sur des intervalles de temps prédéfinis |

Par exemple, on considère que l'énergie fournie au niveau d'un départ (ou d'une phase d'un départ) est égale, aux pertes près, à la somme des énergies consommées par les consommateurs raccordés sur ce départ (ou sur la phase de ce départ). Ainsi, dans une deuxième étape 20, on définit une liste de coefficients $a_{ij}$ avec $i \in [1 ; n]$ correspondant au nombre de compteurs et $j \in [a ; m]$ correspondant au nombre de départ (dans l'exemple de la figure 3, $i \in [1, 2, 3]$ et $j \in [a, b]$) permettant de modéliser cette hypothèse. Ces coefficients permettent de traduire sur quel départ (ou quelle phase) est raccordé un consommateur donné. Si le consommateur i est raccordé sur le départ j alors $a_{ij} = 1$ et si le consommateur i n'est pas raccordé sur le départ j alors $a_{ij} = 0$.

Dans le cas du réseau de la figure 3, on définit une liste suivante de coefficients ($a_{1a}$, $a_{1b}$, $a_{2a}$, $a_{2b}$, $a_{3a}$, $a_{3b}$). Dans cet exemple, la mise en oeuvre du procédé de détermination devrait aboutir à la solution suivante $a_{1a} = 1$, $a_{1b} = 0$, $a_{2a} = 1$, $a_{2b} = 0$, $a_{3a} = 0$, $a_{3b} = 1$.)

On définit :

$E_{Dj}(t \rightarrow t + \Delta t)$ = Energie consommée sur tout le départ j sur l'intervalle de temps $[t ; t + \Delta t]$,
$E_{Ci}(t \rightarrow t + \Delta t)$ = Energie consommée par le consommateur i sur l'intervalle de temps $[t ; t + \Delta t]$,
$Pertes_{Dj}(t \rightarrow t + \Delta t)$ = Energie perdue sur le départ j sur l'intervalle de temps $[t ; t + \Delta t]$.

La conservation de l'énergie est donc traduite pour les différents départs j par les formules suivantes :

$$E_{Dj}(t \rightarrow \Delta t) = \sum_{i=1}^{n} a_{ij} \times E_{Ci}(t \rightarrow \Delta t) + Pertes_{Dj}(t \rightarrow \Delta t)$$

avec $j \in [a; m]$

Dans l'exemple de la figure 3, la conservation de l'énergie est donc traduite pour les départs a et b par les formules suivantes :

$$E_{Da}(t \rightarrow \Delta t) = a_{1a} \times E_{C1}(t \rightarrow \Delta t) + a_{2a} \times E_{C2}(t \rightarrow \Delta t) + a_{3a} \times E_{C3}(t \rightarrow \Delta t) + Pertes_{Da}(t \rightarrow \Delta t)$$

$$E_{Db}(t \rightarrow \Delta t) = a_{1b} \times E_{C1}(t \rightarrow \Delta t) + a_{2b} \times E_{C2}(t \rightarrow \Delta t) + a_{3b} \times E_{C3}(t \rightarrow \Delta t) + Pertes_{Db}(t \rightarrow \Delta t)$$

Dans une troisième étape 30, on effectue une série de mesures au niveau des compteurs de chaque consommateur et au niveau des départs ou des phases dans le poste 22 pendant des périodes définies ou à des instants définis.

Avec l'exemple de la figure 3, supposons que l'on effectue une mesure d'énergie de 7h à 7h30 au niveau de chaque consommateur et en tête de chaque départ. Les résultats sont représentés dans le tableau suivant.

| $E_{C1}$ (7h→7h30) | $E_{C2}$(7h→7h30) | $E_{C3}$(7h→7h30) | $E_{Da}$(7h→7h30) | $E_{Db}$(7h→7h30) |
|---|---|---|---|---|
| 20 Wh | 30 Wh | 100 Wh | 52 Wh | 103 Wh |

Un exemple d'application numérique permet de vérifier l'équation proposée. En multipliant les énergies des consommateurs par le coefficient correspondant (0 ou 1), on obtient :

$$a_{1a} \times E_{C1} + a_{2a} \times E_{C2} + a_{3a} \times E_{C3} = 1 \times 20 + 1 \times 30 + 0 \times 100 = 50$$

$$a_{1b} \times E_{C1} + a_{2b} \times E_{C2} + a_{3b} \times E_{C3} = 0 \times 20 + 0 \times 30 + 1 \times 100 = 100$$

d'où

$$E_{Da} = 52 = 50 + 2$$

$$E_{Db} = 103 = 100 + 3$$

On retrouve bien la modélisation ci-dessus avec les pertes du départ a égales à 2 Wh et les pertes du départ b égales à 3 Wh.

Dans une quatrième étape 40, on teste si on a suffisamment de mesures pour résoudre les équations précédemment mentionnées. Si tel n'est le cas, on boucle sur l'étape 30. Si tel est le cas, on passe à une étape 50.

Dans cette étape, on doit en effet trouver la valeur des coefficients $a_{ij}$ pour pouvoir écrire les formules de conservation de l'énergie.

Dans l'exemple de la figure 3, si on ne fait qu'une seule mesure au niveau de chaque départ et au niveau des consommateurs et qu'on néglige les pertes, alors on a 2 équations pour 6 inconnues :

$$52 \cong a_{1a} \times 20 + a_{2a} \times 30 + a_{3a} \times 100$$

$$100 \cong a_{1b} \times 20 + a_{2b} \times 30 + a_{3b} \times 100$$

d'où

$$a_{1a} \cong \frac{52 - (a_{2a} \times 30 + a_{3a} \times 100)}{20}$$

$$a_{1b} \cong \frac{100 - (a_{2b} \times 30 + a_{3b} \times 100)}{20}$$

On ne peut pas déterminer la valeur de $a_{1a}$ et de $a_{1b}$ car on ne connaît pas la valeur des coefficients $(a_{2a}, a_{2b})$ et $(a_{3a}, a_{3b})$. Il nous faut donc deux autres jeux de mesures d'énergie au niveau de chaque compteur et au niveau de chaque départ. Par exemple sur les créneaux de 7h30 à 8h et 8h à 8h30.

Des exemples de jeux de mesure sont donnés dans le tableau ci-dessous.

| Intervalle | $E_{C1}$ | $E_{C2}$ | $E_{C3}$ | $E_{Da}$ | $E_{Db}$ |
|---|---|---|---|---|---|
| 7h→7h30 | 20 Wh | 30 Wh | 100 Wh | 52 Wh | 103 Wh |

(suite)

| Intervalle | $E_{C1}$ | $E_{C2}$ | $E_{C3}$ | $E_{Da}$ | $E_{Db}$ |
|---|---|---|---|---|---|
| 7h30→8h | 10 Wh | 50 Wh | 50 Wh | 63 Wh | 51 Wh |
| 8h→8h30 | 30 Wh | 75 Wh | 130 Wh | 107 Wh | 135 Wh |

Le nombre de mesures étant suffisant, on peut déterminer la valeur des coefficients ($a_{1a}$, $a_{1b}$, $a_{2a}$, $a_{2b}$, $a_{3a}$, $a_{3b}$) par exemple grâce à un calcul décrit plus bas.

Si on généralise à un cas de n compteurs et m départs, avec un seul jeu de mesures, on a m équations à nxm inconnues. Il nous faut donc n jeux de mesures pour pouvoir résoudre les équations.

Dans une cinquième étape 50, on résout les équations évoquées précédemment et on détermine les coefficients $a_{ij}$.

Les pertes dans le réseau étant faibles (inférieure à 4%), la somme des énergies actives des consommateurs d'un départ donné est pratiquement égale à la somme de l'énergie consommée par le départ, comme vu précédemment. Avantageusement, une des méthode appliquée est, par exemple, la minimisation des moindres carrés de la différence entre l'énergie consommée mesurée au niveau d'un départ donné et la somme des énergies consommées mesurées au niveau de tous les compteurs des consommateurs reliés au poste, les énergies consommées mesurées au niveau de tous les compteurs des consommateurs étant pondérées par les coefficients définis précédemment.

Ainsi, il faut trouver les coefficients $a_{ij}$ tels que la somme S soit minimale, S étant égale à :

$$\sqrt{\sum_{j=1}^{m}\sum_{i=1}^{n}\left[\left(\sum_{i=1}^{n}a_{ij}\times E_{Ci}\text{mesuré}(t\rightarrow\Delta t)\right)-E_{Dj}\text{mesuré}(t\rightarrow\Delta t)\right]^{2}}$$

Soit dans le cas de l'exemple du réseau de la figure 3, il faut trouver les coefficients $a_{1a}$, $a_{1b}$, $a_{2a}$, $a_{2b}$, $a_{3a}$, $a_{3b}$ tels que la somme S soit minimale. S étant égale à $S=\sqrt{S_{1a}{}^{2}+S_{1b}{}^{2}+S_{2a}{}^{2}+S_{2b}{}^{2}+S_{3a}{}^{2}+S_{3b}{}^{2}}$ avec

$$\begin{cases}S_{1a}=a_{1a}\times20+a_{2a}\times30+a_{3a}\times100-52\\S_{1b}=a_{1b}\times20+a_{2b}\times30+a_{3b}\times100-103\\S_{2a}=a_{1a}\times10+a_{2a}\times50+a_{3a}\times50-63\\S_{2b}=a_{1b}\times10+a_{2b}\times50+a_{3b}\times50-51\\S_{3a}=a_{1a}\times30+a_{2a}\times75+a_{3a}\times130-107\\S_{3b}=a_{1b}\times30+a_{2b}\times75+a_{3b}\times130-135\end{cases}$$

La convergence de l'algorithme est assurée grâce à plusieurs moyens. Pour faciliter sa convergence, plusieurs contraintes peuvent être ajoutées comme par exemple :

→ En théorie la valeur des coefficients est 0 ou 1, mais dans le cas où on utilise une technique de résolution en nombres réels, le procédé calcule des valeurs réelles, notamment pour trouver une solution malgré des erreurs de mesure et des pertes d'énergie. Ainsi, il est nécessaire de borner la solution recherchée. Cela se traduit par le système suivant :

$$-\varepsilon\%\leq a_{ij}\leq(1+\varepsilon\%)\quad avec\,j\in[1;m]\,et\,i\in[1;n]$$

$\varepsilon\%$ représente une valeur permettant de tenir compte d'erreurs éventuelles de mesure et de calcul qui est à définir en fonction des appareils utilisés, ainsi que des pertes. 15% est un ordre de grandeur utilisable,

→ Si un consommateur i, $C_i$, est raccordé au départ j, $D_j$, alors il ne peut pas être raccordé à un autre départ. Cette contrainte se traduit par le système suivant :

$$\forall i \in [1;n], \sum_{j=1}^{m} a_{ij} = 1$$

On définit des indices de confiance :

→ à l'issue du calcul précédent, on a obtenu des coefficients $a_{ij}$ avec une valeur comprise entre $-\varepsilon\%$ et $(1 + \varepsilon\%)$.

Dans le cas de l'exemple traité, on obtient :

$(a_{1a}, a_{1b}, a_{2a}, a_{2b}, a_{3a}, a_{3b}) = (0.625, 0.375, 1, 0, 0.075, 0.925)$. On constate que la valeur des coefficients $(a_{1a}, a_{1b})$ ne sont pas proches de 0 ou 1 comme les autres coefficients. Les résultats pourraient donc ne pas être fiables et il est donc nécessaire de vérifier ces résultats en appliquant une autre fois l'algorithme mais sur un autre jeu de données. Cette fiabilité peut être vérifiée en reproduisant plusieurs fois les étapes 30 à 50 sur d'autres jeux de données mesurés à d'autres moments, notamment d'autres moments de la journée ou pendant un autre jour ou mois.

Dans cette étape 50, on calcule des indices de confiance.

Pour rendre les $a_{ij}$ entiers, on effectue un arrondissement à l'entier le plus proche.

Un $a_{ij}$ très proche de 0 (par exemple 0,05) peut clairement être identifié à 0. De même un $a_{ij}$ très proche de 1 (par exemple 1,02) peut être identifié à 1.

Plus un $a_{ij}$ sera proche de 0,5, plus l'affectation sera ambigüe. D'où la nécessité de définir un indice de confiance qui traduit la distance des coefficients $a_{ij}$ par rapport à 0,5.

Une définition possible des indices de confiance est :

$$Ind_{ij} = \frac{|0,5 - a_{ij}|}{0,5} \times 100,$$

exprimé en %

Dans une sixième étape 60, on teste ces indices de confiance. L'obtention d'un mauvais indice de confiance (inférieure à Ref1) traduit soit des erreurs de mesure, soit une dépendance des équations retenues, soit la présence d'une consommation supplémentaire sur le réseau (vol, pertes anormales...). Si le moins bons des indices de confiance est supérieur à une valeur prédéfinie Ref1, alors on enregistre, dans une étape 70, les résultats des différents coefficients $a_{ij}$ déterminant la structure du réseau, c'est-à-dire les raccordements entre les départs et les consommateurs. Si le moins bon des indices de confiance n'est pas supérieur à la valeur prédéfinie Ref1, alors on passe à une étape 80 dans laquelle on stocke les coefficients $a_{ij}$ trouvés et on réitère les étapes 10 à 80 précédentes jusqu'à ce que le nombre d'itérations soit égal à une valeur prédéfinie Ref2.

Ceci est testé à une étape 90. Dans le cas ou le nombre d'itération est égal à la valeur Ref2, on passe à une étape 100 dans laquelle on teste si les différents coefficients trouvés et stockés aux étapes 80 successives sont les mêmes ou sont similaires. Si tel est le cas, on boucle sur l'étape 60. Si tel n'est pas le cas, on passe à une étape 110 dans laquelle on conclut à l'existence d'erreurs de mesure ou à l'existence de pertes non techniques sur le réseau.

En exécutant plusieurs fois l'algorithme (le nombre d'itération étant fixé par l'utilisateur), les configurations de réseau obtenues en sortie peuvent être comparées. Si elles sont toutes identiques, on peut admettre que la solution trouvée correspond à la réalité. Dans le cas contraire, le diagnostic est incertain. La présence de pertes non techniques est alors fortement probable. Tant que le nombre d'itérations est inférieur à une valeur prédéfinie Ref2, on réitère les étapes 10 à 80.

En reprenant l'exemple du réseau de la figure 3, on avait obtenu comme valeurs des coefficients : $(a_{1a}, a_{1b}, a_{2a}, a_{2b}, a_{3a}, a_{3b}) = (0.625, 0.375, 1, 0, 0.075, 0.925)$. Les coefficients $a_{11}$ et $a_{12}$ étaient alors peu fiables.

On considère maintenant le jeu de données du tableau ci-dessous et on recommence l'étape de calcul 50.

| Intervalle | $E_{C1}$ | $E_{C2}$ | $E_{C3}$ | $E_{Da}$ | $E_{Db}$ |
|---|---|---|---|---|---|
| 7h→7h30 | 20 Wh | 30 Wh | 100 Wh | 52 Wh | 103 Wh |
| 16h→16h30 | 10 Wh | 10 Wh | 40 Wh | 21 Wh | 41 Wh |
| 20h→20h30 | 50 Wh | 10 Wh | 5 Wh | 62 Wh | 5.5 Wh |

On trouve : ($a_{1a}$, $a_{1b}$, $a_{2a}$, $a_{2b}$, $a_{3a}$, $a_{3b}$) = (1, 0.9932, 0, 0, 0.0068, 1). Le résultat est très fiable. En prenant un autre jeu de mesures, on peut augmenter la fiabilité du résultat.

La valeur Ref1 vaut par exemple 80%.

La valeur Ref 2 est le nombre d'itérations que l'on se donne avant de considérer que le système ne peut pas converger en raison d'un problème extérieur. Le nombre d'itérations Ref2 augmente la possibilité de convergence mais en contrepartie augmente le temps de résolution et la capacité d'historisation requise.

Dans d'autres modes de réalisation, si les consommateurs sont également producteurs d'électricité, l'affectation de chaque consommateur à la phase ou aux phases auxquelles il est raccordé n'est possible que si l'information de production est connue, c'est-à-dire que le compteur doit non seulement transmettre les informations relatives à la consommation, mais aussi à la production. En effet, on doit savoir quelles informations sont relatives à la production et quelles informations sont relatives à la consommation.

La description ci-dessus fait référence à des postes MT/BT, cependant l'invention s'applique aussi à des postes ou des installations à basse tension (BT) uniquement.

## Revendications

1. Procédé de détermination de la structure d'un réseau (1) de distribution d'électricité comprenant un poste (2) alimentant un ensemble de consommateurs (5, $C_i$) via un ou plusieurs départs (3, $D_j$) présentant une ou plusieurs phases, **caractérisé en ce qu'**il comprend les étapes suivantes :

   - réception de premières informations de consommation électrique relatives à chaque consommateur de l'ensemble,
   - réception de deuxièmes informations de consommation électrique relatives aux départs ou aux phases de chaque départ du poste,
   - utilisation des premières et deuxièmes informations comprenant une phase de calcul, pour déterminer à l'intérieur de l'ensemble, des sous-ensembles de consommateurs, les consommateurs d'un même sous-ensemble étant alimentés par un même départ donné et/ou par une même phase donnée d'un départ donné,

   **caractérisé en ce que** :

   - la phase de calcul comprend le calcul d'un coefficient de confiance,
   - l'étape d'utilisation comprend une phase de comparaison des résultats de différentes itérations de la phase de calcul, et
   - on conclut à l'existence de pertes non techniques sur le réseau si les différents résultats des itérations de la phase de calcul sont sensiblement différents.

2. Procédé de détermination selon la revendication précédente, **caractérisé en ce que** la phase de calcul est basée sur une hypothèse de conservation de l'énergie appliquée aux premières et deuxièmes informations.

3. Procédé de détermination selon l'une des revendications précédentes, **caractérisé en ce que** la phase de calcul comprend le calcul de coefficients ($a_{ij}$) traduisant qu'un consommateur ($C_i$) est raccordé ou non à un départ ($D_j$) ou à une phase.

4. Procédé de détermination selon la revendication précédente, **caractérisé en ce qu'**un coefficient ($a_{ij}$) égal ou sensiblement égal à 1 traduit que le consommateur ($C_i$) est raccordé au départ ou à la phase ($D_j$) et/ou qu'un coefficient ($a_{ij}$) égal ou sensiblement égal à 0 traduit que le consommateur ($C_i$) n'est pas raccordé au départ ou à la phase ($D_j$).

5. Procédé de détermination selon l'une des revendications précédentes, **caractérisé en ce que** la phase de calcul, notamment une phase de calcul de coefficients ($a_{ij}$), utilise une méthode d'optimisation du type moindres carrés.

6. Procédé de détermination selon la revendication précédente, **caractérisé en ce que**, si les différents résultats des itérations de la phase de calcul sont sensiblement différents, on conclut à l'existence d'un dysfonctionnement sur le réseau.

7. Support d'enregistrement de données lisible par un calculateur sur lequel est enregistré un programme d'ordinateur comprenant des moyens logiciels de mise en oeuvre des étapes du procédé selon l'une des revendications précédentes.

**8.** Dispositif (8) de détermination de la structure d'un réseau (1) de distribution d'électricité comprenant un poste (2) alimentant un ensemble de consommateurs (5, $C_i$) via un ou plusieurs départs (3, $D_j$) présentant une ou plusieurs phases, **caractérisé en ce qu'**il comprend des moyens (81, 82, 83) adaptés pour la mise en oeuvre des étapes du procédé selon l'une des revendications 1 à 6.

**9.** Dispositif selon la revendication précédente, **caractérisé en ce que** les dites moyens comprennent des moyens matériels comprennant un moyen (81) de réception d'informations de consommation d'énergie, notamment de réception de premières informations de consommation électrique relative à chaque consommateur de l'ensemble et de réception de deuxièmes informations de consommation électrique relatives aux des départs ou aux phases de chaque départ du poste, un moyen (82) d'analyse ou de traitement comprenant un moyen de calcul et un moyen (83) de restitution d'informations, notamment d'informations concernant des sous-ensembles de consommateurs alimentés par un même départ donné et/ou par une même phase donnée d'un départ donné.

**10.** Programme informatique comprenant un moyen de code de programme informatique adapté à l'exécution des étapes du procédé selon l'une des revendications 1 à 6, lorsque le programme est exécuté sur un ordinateur.

**Patentansprüche**

**1.** Verfahren zur Bestimmung der Struktur eines Elektrizitätsverteilungsnetzes (1), umfassend eine Station (2), die eine Gesamtheit von Konsumenten (5, $C_i$) über einen oder mehrere Ausgänge (3, $D_j$), die eine oder mehrere Phasen aufweisen, versorgt, **dadurch gekennzeichnet, dass** es die folgenden Schritte umfasst:

- Empfang von ersten elektrischen Verbrauchsinformationen in Zusammenhang mit jedem Konsumenten der Gesamtheit,
- Empfang von zweiten elektrischen Verbrauchsinformationen in Zusammenhang mit den Ausgängen oder den Phasen jedes Ausgangs der Station,
- Verwendung der ersten und zweiten Informationen, umfassend eine Berechnungsphase, um innerhalb der Gesamtheit Untergesamtheiten von Konsumenten zu bestimmen, wobei die Konsumenten einer selben Untergesamtheit von einem selben gegebenen Ausgang und/oder von einer selben gegebenen Phase eines gegebenen Ausgangs versorgt werden,

**dadurch gekennzeichnet, dass**:

- die Berechnungsphase die Berechnung eines Vertrauenskoeffizienten umfasst,
- der Verwendungsschritt eine Vergleichsphase der Resultate von verschiedenen Iterationen der Berechnungsphase umfasst, und
- auf das Vorhandensein von nicht technischen Verlusten in dem Netz geschlossen wird, wenn die verschiedenen Resultate der Iterationen der Berechnungsphase im Wesentlichen unterschiedlich sind.

**2.** Bestimmungsverfahren nach dem vorhergehenden Anspruch, **dadurch gekennzeichnet, dass** die Berechnungsphase auf einer Hypothese der Bewahrung der an den ersten und zweiten Informationen angewandten Energie basiert.

**3.** Bestimmungsverfahren nach einem der vorhergehenden Ansprüche, **dadurch gekennzeichnet, dass** die Berechnungsphase die Berechnung von Koeffizienten ($a_{ij}$) umfasst, die zeigt, dass ein Konsument ($C_i$) an einen Ausgang ($D_j$) oder an eine Phase angeschlossen ist oder nicht.

**4.** Bestimmungsverfahren nach dem vorhergehenden Anspruch, **dadurch gekennzeichnet, dass** ein Koeffizient ($a_{ij}$) gleich oder im Wesentlichen gleich 1 zeigt, dass der Konsument ($C_i$) an den Ausgang oder an die Phase ($D_j$) angeschlossen ist, und/oder dass ein Koeffizient ($a_{ij}$) gleich oder im Wesentlichen gleich 0 zeigt, dass der Konsument ($C_i$) nicht an den Ausgang oder an die Phase ($D_j$) angeschlossen ist.

**5.** Bestimmungsverfahren nach einem der vorhergehenden Ansprüche, **dadurch gekennzeichnet, dass** die Berechnungsphase, insbesondere eine Berechnungsphase von Koeffizienten ($a_{ij}$), eine Methode der Optimierung der kleinsten Quadrate verwendet.

6. Bestimmungsverfahren nach dem vorhergehenden Anspruch, **dadurch gekennzeichnet, dass**, wenn die verschiedenen Resultate der Iterationen der Berechnungsphase im Wesentlichen unterschiedlich sind, auf das Vorhandensein einer Fehlfunktion in dem Netz geschlossen wird.

7. Aufzeichnungsträger von Daten, der von einem Rechner, auf dem ein Computerprogramm gespeichert ist, lesbar ist, umfassend Software-Mittel für den Einsatz der Schritte des Verfahrens nach einem der vorhergehenden Ansprüche.

8. Vorrichtung (8) zur Bestimmung der Struktur eines Elektrizitätsverteilungsnetzes (1), umfassend eine Station (2), die eine Gesamtheit von Konsumenten (5, $C_i$) über einen oder mehrere Ausgänge (3, $D_j$), die eine oder mehrere Phasen aufweisen, versorgt, **dadurch gekennzeichnet, dass** es Mittel (81, 82, 83) umfasst, die für den Einsatz der Schritte des Verfahrens nach einem der Ansprüche 1 bis 6 geeignet sind.

9. Vorrichtung nach dem vorhergehenden Anspruch, **dadurch gekennzeichnet, dass** die Mittel Hardware-Mittel umfassen, umfassend ein Mittel (81) für den Empfang von Energieverbrauchsinformationen, insbesondere für den Empfang von ersten Informationen über den elektrischen Verbrauch in Zusammenhang mit jedem Konsumenten der Gesamtheit und für den Empfang von zweiten Informationen über den elektrischen Verbrauch in Zusammenhang mit den Ausgängen oder den Phasen jedes Ausgangs der Station, ein Mittel (82) zur Analyse oder Verarbeitung, umfassend ein Berechnungsmittel und ein Mittel (83) zur Wiedergabe von Informationen, insbesondere von Informationen betreffend Untergesamtheiten von Konsumenten, die von einem selben gegebenen Ausgang und/oder von einer selben gegebenen Phase eines gegebenen Ausgangs versorgt werden.

10. Computerprogramm, umfassend ein Computerprogrammcodemittel, das für die Ausführung der Schritte des Verfahrens nach einem der Ansprüche 1 bis 6 geeignet ist, wenn das Programm auf einem Computer ausgeführt wird.

**Claims**

1. Method for determining the structure of an electricity distribution network (1) comprising a substation (2) supplying power to a set of consumers (5, $C_i$) via one or more feeds (3, $D_j$) having one or more phases, **characterized in that** it comprises the following steps:

   - receiving first items of electrical consumption information relating to each consumer of the set,
   - receiving second items of electrical consumption information relating to the feeds or to the phases of each feed of the substation,
   - using the first and second items of information, comprising a computing phase, to determine, within the set, subsets of consumers, the consumers of one and the same subset being supplied with power by one and the same given feed and/or by one and the same given phase of a given feed,

   **characterized in that**:

   - the computing phase comprises computing a coefficient of confidence,
   - the usage step comprises a phase of comparing the results of various iterations of the computing phase, and
   - it is concluded that non-technical losses exist on the network if the various results of the iterations of the computing phase are substantially different.

2. Determination method according to the preceding claim, **characterized in that** the computing phase is based on a conservation of energy assumption applied to the first and second items of information.

3. Determination method according to either of the preceding claims, **characterized in that** the computing phase comprises computing coefficients ($a_{ij}$) reflecting that a consumer ($C_i$) is or is not connected to a feed ($D_j$) or to a phase.

4. Determination method according to the preceding claim, **characterized in that** a coefficient ($a_{ij}$) equal or substantially equal to 1 reflects that the consumer ($C_i$) is connected to the feed or to the phase ($D_j$) and/or **in that** a coefficient ($a_{ij}$) equal or substantially equal to 0 reflects that the consumer ($C_i$) is not connected to the feed or to the phase ($D_j$).

5. Determination method according to one of the preceding claims, **characterized in that** the computing phase, in particular a phase of computing coefficients ($a_{ij}$), uses an optimization method of the least squares type.

6. Determination method according to the preceding claim, **characterized in that**, if the various results of the iterations of the computing phase are substantially different, it is concluded that a malfunction exists on the network.

7. Computer-readable data recording medium on which a computer program comprising software means for implementing the steps of the method according to one of the preceding claims is recorded.

8. Device (8) for determining the structure of an electricity distribution network (1) comprising a substation (2) supplying power to a set of consumers (5, $C_i$) via one or more feeds (3, $D_j$) having one or more phases, **characterized in that** it comprises means (81, 82, 83) designed to implement the steps of the method according to one of Claims 1 to 6.

9. Device according to the preceding claim, **characterized in that** said means comprise hardware means comprising a means (81) for receiving items of power consumption information, in particular for receiving first items of electrical consumption information relating to each consumer of the set and for receiving second items of electrical consumption information relating to the feeds or to the phases of each feed of the substation, an analysing or processing means (82) comprising a computing means, and a means (83) for recovering items of information, in particular items of information concerning subsets of consumers supplied with power by one and the same given feed and/or by one and the same given phase of a given feed.

10. Computer program comprising a computer program code means designed to execute the steps of the method according to one of Claims 1 to 6 when the program is executed on a computer.

FIG.1

FIG.2

FIG.3

Définition de données et du principe:
- intervalle [t; t+Δt)
- données des n compteurs → $E_{Ci}$ (t→Δt)
- mesures de m départs → $E_{Dj}$ (t→Δt)

— 10

Définition d'une liste de coefficients $a_{ij}$ tels que pour j = 1, ..., m
$E_{Dj} = \sum (a_{ij} E_{ci})$ + pertes

— 20

Mesures — 30

NON Nombre de mesures suffisants? — 40

OUI

Détermination des coefficients (résolution du système linéaire) et des indices de confiance associés. — 50

Le plus petit des Indices de confiance > Ref1 ? — 60

OUI

Enregistrement des coefficients. Utilisation ultérieure éventuelle. — 70

NON

Enregistrements des coefficients trouvés — 80

NON Nombre d'itération = Ref 2? — 90

OUI

Diagnostic incertain
- Erreurs de mesures
- Vol
— 110

NON Les solutions trouvées sont les mêmes? — 100

OUI

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100007219 A
- DE 102008044915
- US 2007005277 A
- US 200714313 B